# EUROPÄISCHE PATENTSCHRIFT

(11) **EP 1 081 303 B1**
(45) Veröffentlichungstag und Bekanntmachung des Hinweises auf die Patenterteilung: **29.12.2004**
(21) Anmeldenummer: 00113335.4
(22) Anmeldetag: 23.06.2000
(51) Int. Cl.: E04B 2/88, E04B 2/92, F24J 2/04

(54) **Gebäudefassade in Doppelhautbauweise**
Doubleleafed building facade
Façade de bâtiment à double paroi

(30) Priorität: 17.07.1999 DE 19933682
(43) Veröffentlichungstag der Anmeldung: 07.03.2001
(73) Patentinhaber: Niklaus, Hilmar, 97654 Bastheim (DE)
(72) Erfinder: Niklaus, Hilmar, 97654 Bastheim (DE)
(74) Vertreter: Pöhner, Wilfried Anton, Dr.

(56) Entgegenhaltungen:
- EP-A- 0 692 686
- DE-U- 29 722 883
- FR-A- 2 653 470

## Beschreibung

Die vorliegende Erfindung bezieht sich auf eine Gebäudefassade in Doppelhautbauweise, bestehend aus Gebäudefassade in Doppelhautbauweise, bestehend aus mehrteiligen horizontalen und vertikalen Profilen, die eine die Gebäudefassade außenseitig flächig abdeckende Rahmenstruktur bilden, einer Tragstruktur, die die Tragstruktur horizontal nach innen fortsetzt, sowie aus beabstandeten Verkleidungsplattenebenen, vorzugsweise aus Glas, wobei die die außenseitige Verkleidungsplattenebene bildenden Verkleidungsplatten in die Rahmenstruktur eingesetzt sind.

Oft ist es aus ästhetischen oder anderen Gründen erwünscht große Gebäudeflächen transparent zu gestalten. Als typische Anwendungsfälle sind hier selbstverständlich Wintergärten und Gewächshäuser zu nennen, darüberhinaus ist es aber auch eine aus rein praktischen Erwägungen herausgewählte Bauweise: Je mehr natürliches Licht in ein Gebäude fällt, desto angenehmer ist es zu bewohnen. Abgesehen von diesem rein praktischen Standpunkt gibt es selbstverständlich aus ästhetische Kriterien, die immer häufiger zum Einsatz solcher Fassaden führt. Dabei ist aber zu beachten, daß insbesondere Glasscheiben eine hohe Wärmeleitfähigkeit aufweisen und daß daher spezielle Maßnahmen getroffen werden müssen um die Energieverluste möglichst gering zu halten. Sehr häufig kommen dabei hochwertig thermisch isolierende Scheiben zur Anwendung, die auch mehrschichtig ausgeführt sein können. Diese werden gewöhnlich in mehrteiligen horizontalen und vertikalen Profilen, die eine, die Gebäudefassade außenseitig flächig abdeckende, Rahmenstruktur bilden, eingesetzt. Der Befestigung der Scheiben an der Rahmenstruktur gilt besondere Aufmerksamkeit, Wärmebrücken sind zu vermeiden. Gerade diese Verbindungen sind es, die sehr häufig für die schlechte Isolationswirkung solcher Fassaden verantwortlich sind. Sollte zusätzlich noch Holz Verwendung finden, so ist die Kondenzwasserbildung, die die Lebensdauer der eingesetzten Elemente beträchtlich reduziert ein noch viel größeres Problem als der Energieverlust selbst.

Aus dem deutschen Gebrauchsmuster 297 22 883.8 ist ein mehrteiliges Profil für wärmeisolierende Gebäudeverkleidungen bekannt, indem Verkleidungsplatten eingesetzt sind, wobei das Profil aus einem innenseitigen Basisprofil und einem außenseitigen Klemmprofil besteht. Basis und Klemmprofil sind dabei über einen Dämmkern verbunden, wobei die Schrauben zur Verankerung des Klemmprofils in den Dämmkern eindringen, aber nicht direkt mit dem Basisprofil in Kontakt stehen. Die Verbindung weist also eine hohe mechanische Festigkeit auf ohne die dafür typische Wärmeleitung. Die Rahmenstruktur gebildet aus den horizontalen und vertikalen Profilen wird durch eine Tragstruktur nach innen fortgesetzt, wobei letztere mit den Profilen verschraubt ist, so daß die Last der Verkleidungsplatten auf sie übergeleitet wird. Das Klemmprofil kann außenseitig mit einem Deckprofil abgedeckt werden, das aufgeklippst wird. Als Profilmaterial wird üblicherweise Aluminium eingesetzt, um hohe Eigenstabilität mit geringem Eigengewicht zu verbinden. Zur Färbung können die Profile mit einer Pulverbeschichtung versehen oder mit dem gewünschten Farbton eloxiert werden. Bemerkenswert ist an dieser Ausführung insbesondere, daß vom Innenraum aus betrachtet die Fassadenkonstruktion nicht zu erkennen ist, also insbesondere keine Metall zu sehen ist und daß bei Einsatz von Holz für die Tragstruktur ein ganz natürlicher Eindruck entsteht.

Nachteile bei diesem Fassadentyp ergeben sich daraus, daß nur eine Verkleidungsplattenebene vorgesehen ist und das selbst wenn durch entsprechende Befestigung die Wärmebrückenbildung reduziert ist, so doch auch bei Verwendung von hochwertigen Isolierglas ein erheblicher Energieverlust auftritt.

Aufgabe der vorliegenden Erfindung ist es, eine Gebäudefassade in Doppelhautbauweise zur Verfügung zu stellen, die einen verbesserten k-Wert, also eine gute Wärmeisolation und verbesserten Schallschutz aufweist.

Erfindungsgemäß wird diese Aufgabe dadurch gelöst, daß die die innenseitige Verkleidungsplattenebene bildenden Verkleidungsplatten in der Tragstruktur befestigt sind.

Die Tragstruktur ist die horizontale Fortsetzung der Rahmenstruktur nach innen. Daher können problemlos Verkleidungsplatten gleicher Abmessungen, wie die der außenseitigen Verkleidungsplattenebene eingesetzt werden. Eine spezielle Konstruktion mit horizontal und vertikal verlaufenden Profilen ist hier nicht notwendig, da durch die außenseitige Verkleidungsplattenebene schon eine gute Isolierung erzeugt wird. Der Abstand zwischen innerer und äußerer Ebene kann aus einem großen Bereich frei gewählt werden, um dabei konstruktionsbedingten, aber auch ästhetischen Forderungen zu genügen. Es entsteht dadurch eine Gebäudefassade in Doppelhautbauweise, deren Vorteil zunächst in der verbesserten Wärmedämmung gegenüber der einflächigen Ausführung liegen. Darüberhinaus wird aber auch insbesondere durch Wahl eines großen Abstands zwischen den beiden Ebenen eine sehr gute Schalisolierung erzeugt.

In einer ersten bevorzugten Ausführungsform der Erfindung besteht die Tragstruktur aus Birkenfurnierschichtholz.

Birkenfurnierschichtholz ist ein in der Holzbautechnik erprobter Werkstoff mit großer Tragfähigkeit. Die Tragstruktur muß letztlich die gesamte Last der Verkleidungsplattenebenen aufnehmen, was mit Birkenfurnierschichtholz gewährleistet ist. Sehr häufig wünschen sich auch Bauherren keine modernistische Fassade aus Stahlträgern oder Beton, dieser Gruppe kommt Birkenfurnierschichtholz als natürliches Material entgegen. Aus dem Gebäudeinneren ist nur der Holzaufbau zu erkennen, was zu einem angenehmen Raumklima beiträgt.

Üblicherweise wird außen- und innenseitige Verkleidungsplatten parallel sein.

Selbstverständlich sind auch andere Anordnungen möglich, aber eine parallele Anordnung von außenund innenseitigen Verkleidungsplattenebene ermöglicht den kostengünstigsten Aufbau. Einerseits kann die Tragstruktur in gleichmäßiger Tiefe ausgeführt sein, andererseits üben die Verkleidungsplatten dann eine normal zur Oberfläche der Tragstruktur ausgerichtete Last aus. Es werden also kaum Scherkräfte frei und der Sitz der Verkleidungsplatten in der Tragstruktur muß nicht über Gebühr gegen Verrutschen oder Kippen gesichert sein. Von Vorteil ist es, wenn die innenseitigen Verkleidungsplatten jeweils in einer umlaufenden Nut der Tragstruktur eingesetzt und mittels Klemmstücken kraftschlüßig in diesem befestigt sind und daß die Fugen zwischen den Verkleidungsplatten mit Dichtmaterial ausgefüllt sind.

Diese erlaubt eine sehr einfache Vorgehensweise bei der Montage: Die Verkleidungsplatten werden entsprechend der gewünschten Position eingesetzt und dann mittels Klemmstücken fixiert. Sollte die Ausrichtung fehlerhaft sein, können die Klemmstücke wieder entfernt werden und die Tragstruktur neu positioniert werden. Zur Vermeidung der Ablagerung von Staub, aber auch aus optischen Gründen sind die Fugen zwischen den Verkleidungsplatten und der Tragstruktur mit Dichtmaterial ausgefüllt. Dadurch wird auch ein unerwünschter Luftzug ausgeschlossen.

In Erweiterung der vorliegenden Erfindung können die Verkleidungsplatten aus parallelen transparenten Scheiben bestehen.

Dies ist dann von Vorteil, wenn eine sehr große thermische Isolation erwünscht ist. Wenn die parallelen transparenten Scheiben bereits aneinander befestigt sind, können sie einfach mit dem oben genannten Verfahren eingesetzt werden. Handelt es sich um zwei einzelne transparente Scheiben, so müssen nur an geeigneter Stelle Abstandhalter eingesetzt werden und die Montage ist nicht wesentlich komplizierter. Zusätzliche Vorteile bei dieser Ausführung ergeben sich auch insbesondere in Bezug auf den Schallschutz.

Zwischen außen- und innenseitiger Verkleidungsplattenebene können Lichtquellen, lichttechnische Bauteile, wie etwa Prismen, Spiegel oder Linsen, lichtundurchlässige Bauteile, wie etwa Rolläden oder Vorhänge, und/oder Solarkollektoren oder Solarzellen angeordnet sein.

Der Zwischenraum zwischen außen- und innenseitiger Verkleidungsplattenebene kann mit zusätzlichen Bauteilen ausgestattet sein, die verschiedenste Funktionen erfüllen können. So können etwa Lichtquellen angebracht sein, die den Raum flächig beleuchten. Auch eine spezielle Anordnung der Lichtquellen zur werbewirksamen Beleuchtung nach außen ist denkbar. Desweiteren können lichttechnische Bauteile zur Lichtlenkung vorgesehen sein. Dafür kommen insbesondere Prismen, Spiegel oder Linsen in Betracht, deren Ausrichtung auch entsprechend gesteuert werden kann, so daß das Licht an einer gewünschten Stelle gebündelt wird oder den Raum gleichförmig erhält. Zusätzlich können noch lichtundurchlässige Bauteile, wie etwa Rolläden oder Vorhänge angebracht sein, so daß sich z. B. im Sommer der Raum nicht allzusehr aufheizt. Auch Solarkollektoren oder Solarzellen können wirksam zum Einsatz kommen, sie nehmen wie Rolläden oder Vorhänge das Licht auf, die aufgenommene Energie kann im Haushalt energiesparend zum Einsatz kommen.

In weiterer Ausgestaltung der Erfindung ist ein Gebläse vorhanden, welches die zwischen den Scheiben befindliche Luft über einen Wärmetauscher zirkulieren läßt.

Zwischen den beiden Verkleidungsplattenebenen kann sich ein Treibhauseffekt ausbilden: Die darin befindliche Luft heizt sich bei Sonneneinstrahlung auf. Diese Energie wird nun gleichermaßen ins Rauminnere als auch nach außen hin abgestrahlt. Diese gespeicherte Energie kann aber dadurch genutzt werden, daß die zwischen den Scheiben befindliche Luft über einen Wärmetauscher zirkuliert. Dazu dient ein Gebläse, welches diesen Luftkreislauf in Gang hält und so dem Wärmetauscher stets warme Luft zu und gekühlte Luft abführt. Die vom Wärmetauscher übertragene Energie kann z. B. zur Erzeugung von Warmwasser oder zur Beheizung dienen.

Weitere Einzelheiten, Merkmale und Vorteile der Erfindung lassen sich dem nachfolgenden Beschreibungsteil entnehmen, indem anhand einer Zeichnung ein Ausführungsbeispiel der Erfindung näher erläutert ist. Sie zeigt in perspektivischer Darstellung ein Fassadensegment einer erfindungsgemäßen Gebäudefassade in Doppelhautbauweise.

An der Außenseite sind Abdeckungen der mehrteiligen horizontalen Profile (1) und vertikalen Profile (2) zu sehen. Die mehrteiligen Profile bestehen jeweils aus einem äußeren und inneren Teil, so besteht etwa ein vertikales Profil (2) aus einem äußeren Profil (21) und einen inneren Profil (22). Die die äußere Verkleidungsplattenebene (3) bildenden Verkleidungsplatten (31) sind in den horizontale Profilen (1) und vertikalen Profilen (2) befestigt. Über einen nicht dargestellten Dämmkern sind die äußeren mit den inneren Profilen verschraubt. Die Tragstruktur (4) setzt die aus den mehrteiligen horizontalen (1) und vertikalen Profilen (2) gebildeten Rahmenstruktur horizontal nach innen fort, so daß ihre im vertikalen Querschnitt dargestellte Anordnung der der Rahmenstruktur entspricht. Die einzelnen Balken, die die Tragstruktur (4) aufbauen sind aus Birkenfurnierschichtholz (50) gefertigt. In wesentlichem Abstand von der äußeren Verkleidungsplattenebene (3) ist eine innere Verkleidungsplattenebene (5) angeordnet. Sie ist parallel zur äußeren Verkleidungsplattenebene (3) und ihrere einzelnen Verkleidungsplatten (51) sind in eine umlaufende Nut (6) der Tragstruktur (4) eingesetzt, wobei sie mittels Klemmstücken (7) kraftschlüssig befestigt sind. Die Fugen zwischen den Verkleidungsplatten (51) und der Tragstruktur (4) sind mit Dichtmaterial (8) ausgefüllt. Die Verkleidungsplatten (31) und (51) bestehen aus Doppelscheiben, es können aber auch andere Materialien und insbesondere unterschiedliche Materialien für die äußere Verkleidungsplattenebene (3) und innere Verkleidungsplattenebene (5) zum Einsatz kommen. Die Tragfähigkeit des Birkenfurnierschichtholzes, aus dem die Tragstruktur (4) besteht, erlaubt es den Abstand zwischen den beiden Verkleidungsplattenebenen so groß zu wählen, daß in deren Zwischenraum zusätzliche Bauteile angeordnet werden können. Das dargestellte Ausführungsbeispiel ist mit Rolläden (9) ausgestattet, die zum Sonnenschutz dienen. Darüberhinaus kann der Abstand zwischen den beiden Verkleidungsplattenebenen aber so frei gewählt werden, daß auch Lichtquellen lichttechnische Bauteile und/oder Solarkollektoren und Solarzellen Platz finden.

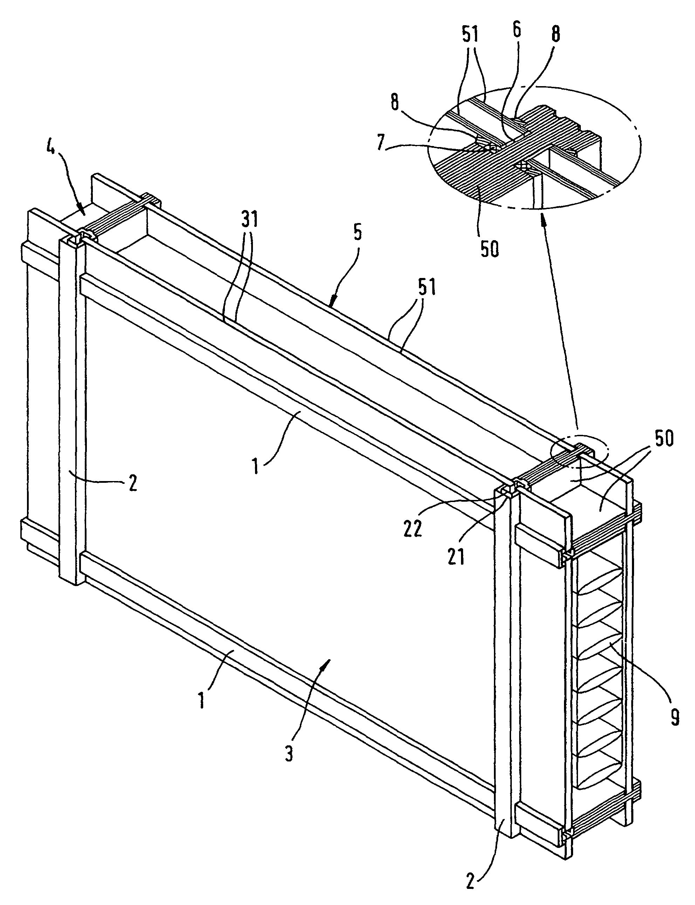

## Patentansprüche

1. Gebäudefassade in Doppelhautbauweise, bestehend aus mehrteiligen horizontalen (1) und vertikalen Profilen (2), die eine die Gebäudefassade außenseitig flächig abdeckende Rahmenstruktur bilden, einer Tragstruktur (4), die die Rahmenstruktur horizontal nach innen fortsetzt, sowie aus beabstandeten Verkleidungsplattenebenen (3, 5), vorzugsweise aus Glas, wobei die die außenseitige Verkleidungsplattenebene (3) bildenden Verkleidungsplatten (31) in die Rahmenstruktur eingesetzt sind, **dadurch gekennzeichnet, daß** die die innenseitige Verkleidungsplattenebene (5) bildenden Verkleidungsplatten (51) in der Tragstruktur (4) befestigt sind.

2. Gebäudefassade in Doppelhautbauweise nach Anspruch 1, **dadurch gekennzeichnet, daß** die Tragstruktur (4) aus Birkenfurnierschichtholz besteht.

3. Gebäudefassade in Doppelhautbauweise nach einem der vorhergehenden Ansprüche, **dadurch gekennzeichnet, daß** außenseitige (3) und innenseitige Verkleidungsplattenebene (5) parallel sind.

4. Gebäudefassade in Doppelhautbauweise nach einem der vorhergehenden Ansprüche, **dadurch gekennzeichnet, daß** die innenseitigen Verkleidungsplatten (51) jeweils in einer umlaufenden Nut (6) der Tragstruktur (4) eingesetzt und mittels Klemmstücken (7) kraftschlüssig in diesen befestigt sind und daß die Fugen zwischen den Verkleidungsplatten (51) und der Tragstruktur (4) mit Dichtmaterial (8) ausgefüllt sind.

5. Gebäudefassade in Doppelhautbauweise nach einem der vorhergehenden Ansprüche, **dadurch gekennzeichnet, daß** die Verkleidungsplatten (31, 51) aus parallelen transparenten Scheiben bestehen.

6. Gebäudefassade in Doppelhautbauweise nach einem der vorhergehenden Ansprüche, **dadurch gekennzeichnet, daß** zwischen außenseitiger (3) und innenseitiger Verkleidungsplattenebene (5) Lichtquellen, lichttechnische Bauteile, wie etwa Prismen, Spiegel oder Linsen, lichtundurchlässige Bauteile, wie etwa Rolläden (9) oder Vorhänge, und/oder Solarkollektoren oder Solarzellen angeordnet sind.

7. Gebäudefassade in Doppelhautbauweise nach einem der vorhergehenden Ansprüche, **dadurch gekennzeichnet, daß** ein Gebläse vorhanden ist, welches die zwischen den Scheiben befindliche Luft über einen Wärmetauscher zirkulieren läßt.

## Claims

1. Building front in double-skin design, consisting of several horizontal (1) and vertical profiles (2), which form a frame structure covering the outside surface of the building front, of a carrier structure (4), which continues the frame structure horizontally inwards, as well as of interspaced lining board levels (3, 5), preferably made of glass, whereby the lining boards (31) forming the outside lining board level (3) are inserted into the frame structure, **characterised in that** the lining boards (51) forming the inside lining board level (5) are fixed in the carrier structure (4).

2. Building front in double-skin design in accordance with Claim 1, **characterised in that** the carrier structure (4) is made of birch veneer laminated wood.

3. Building front in double-skin design in accordance with one of the aforesaid claims, **characterised in that** the outside (3) and inside lining board levels (5) are parallel.

4. Building front in double-skin design in accordance with one of the aforesaid claims, **characterised in that** the inside lining boards (51) are each inserted into a continuous groove (6) of the carrier structure (4) and are non-positively fixed to same by clamping pieces (7), and that the joints between the lining boards (51) and carrier structure (4) are filled with sealing material (8).

5. Building front in double-skin design in accordance with one of the aforesaid claims, **characterised in that** the lining boards (31, 51) comprise parallel transparent panes.

6. Building front in double-skin design in accordance with one of the aforesaid claims, **characterised in that** between the outside (3) and inside lining board level (5) light sources, technical light components, such as prisms, mirrors or lenses, light-impervious components, such as slatted roller blinds (9) or curtains, and/or solar collectors or solar cells, are appointed.

7. Building front in double-skin design in accordance with one of the aforesaid claims, **characterised in that** a fan is available, which can circulate the air between the panes via a heat exchanger.

## Revendications

1. Façade à double construction pour bâtiment, composée de profilés horizontaux (1) en plusieurs pièces et de profilés verticaux (2) formant un cadre qui recouvre la surface extérieure de la façade, d'une structure portante (4) qui prolonge le cadre horizontalement vers l'intérieur, et de plans de plaques de revêtement (3, 5) séparés par un espace et de préférence en verre, les plaques (31) formant le plan extérieur (3) étant insérées dans le cadre, **caractérisée en ce que** les plaques de revêtement (51) formant le plan intérieur (5) sont fixées dans le cadre (4).

2. Façade à double construction pour bâtiment selon la revendication 1, **caractérisée en ce que** la structure portante (4) est composée de contreplaqué de bois de bouleau stratifié.

3. Façade à double construction pour bâtiment selon l'une des revendications précédentes, **caractérisée en ce que** les plans extérieur (3) et intérieur (5) de plaques de revêtement sont parallèles.

4. Façade à double construction pour bâtiment selon l'une des revendications précédentes, **caractérisée en ce que** les plaques de revêtement intérieures (51) sont emboîtées dans une rainure circulaire (6) dans la structure portante (4), dans laquelle elle sont fixées au moyen de cales (7) et **en ce que** les interstices entre les plaques de revêtement intérieures (51) et la structure portante (4) sont remplis d'un matériau d'étanchéité (8).

5. Façade à double construction pour bâtiment selon l'une des revendications précédentes, **caractérisée en ce que** les plaques de revêtement (31, 51) sont composées de vitres parallèles transparentes.

6. Façade à double construction pour bâtiment selon l'une des revendications précédentes, **caractérisée en ce que** des sources de lumière telles que des prismes, des miroirs ou des lentilles, ou bien des éléments ne laissant pas passer la lumière tels que des volets roulants (9) ou des rideaux, et/ou des capteurs solaires ou des cellules solaires, sont placés entre le plan extérieur (3) et le plan intérieur (5) de plaques de revêtement.

7. Façade à double construction pour bâtiment selon l'une des revendications précédentes, **caractérisée en ce que** la construction est dotée d'une soufflante qui fait recirculer l'air se trouvant entre les vitres par un échangeur de chaleur.
